# EUROPÄISCHE PATENTSCHRIFT

(11) **EP 0 735 292 B1**
(45) Veröffentlichungstag und Bekanntmachung des Hinweises auf die Patenterteilung: **05.09.2001**
(21) Anmeldenummer: 96104762.8
(22) Anmeldetag: 26.03.1996
(51) Int. Cl.: F16D 59/02

(54) **Verfahren zum Betrieb einer elektromagnetisch lüftbaren Federkraftbremse bei sanftem Bremseinsatz**
Method of operating an electromagnetically released spring-applied brake with smooth braking initiation
Procédé de fonctionnement d'un frein à ressort à déssérage électro-magnétiqueà initiation de freinage souple

(30) Priorität: 30.03.1995 DE 19511768
(43) Veröffentlichungstag der Anmeldung: 02.10.1996
(73) Patentinhaber: Lenze GmbH & Co. KG Aerzen, D-31855 Aerzen (DE)
(72) Erfinder: Habenicht, Horst, 32699 Extertal (DE); Plass, Gerhard, 32699 Extertal (DE)
(74) Vertreter: Elbertzhagen, Otto, Dipl.-Ing.

(56) Entgegenhaltungen:
- WO-A-93/10368
- DE-A- 2 820 204
- DE-A- 3 906 069

## Beschreibung

Die Erfindung bezieht sich auf ein Verfahren zum Betrieb einer elektromagnetisch lüftbaren Federkraftbremse der im Gattungsbegriff des Patentanspruchs 1 näher bezeichneten Art.

Ein solches Verfahren ist aus der DE 28 20 204 C2 bekannt. In diesem Dokument wird bereits darauf hingewiesen, daß für den praktischen Betrieb eine Notwendigkeit dahingehend besteht, die Bremskraft der elektromagnetisch lüftbaren Federkraftbremse variieren zu können. Denn bei bloßer Abschaltung des Erregerstroms für den Lüftungsmagneten steht ausschließlich das von der Kraft der mechanischen Druckfedern abhängige, volle Bremsmoment zur Verfügung. Zwar kann für Notsituationen eine dementsprechende Vollbremsung vorgesehen werden, bei normalen Betriebsbedingungen variiert man jedoch das Bremsmoment entsprechend der abzubremsenden Last oder gemäß den gewünschten Einsatzbedingungen, indem man nach dem bekannten Verfahren den Haltestrom zunächst abschaltet und kurzzeitig danach auf die Erregerspule des Lüftungsmagneten eine auf einen Teil der Betriebsspannung reduzierte Spannung aufschaltet, so daß sich als Erregerstrom der gegenüber dem Lösestrom verminderte Teilstrom ergibt. Entsprechend wird auf die sich an den Bremsrotor anlegende Ankerscheibe eine der Kraft der mechanischen Bremsfedern entgegenwirkende Magnetkraft ausgeübt, wodurch die Bremskraft gemäß den gewünschten Bremsbedingungen gegenüber der Vollbremsung reduziert wird, was man je nach der gewünschten verzögerten Bremswirkung zumindest beim Bremseinsatz oder auch für den gesamten Bremsvorgang variieren kann.

Ein wesentlicher Nachteil des bekannten Verfahrens besteht darin, daß sich die Bedingungen für die Bestimmung des jeweils gewünschten Teilbremsmomentes aufgrund zweier Einflußfaktoren ändern. Zum einen tritt infolge Verschleißes mit zunehmender Betriebsdauer eine Vergrößerung des Luftspaltes zwischen der den Bremsrotor beaufschlagenden Ankerscheibe und dem Magnetteil ein und zum anderen kann sich eine Verringerung der Speisegleichspannung ergeben, die auf eine Erschöpfung der Batterien zurückzuführen ist, mit denen die vornehmlich mit solchen Federkraftbremsen ausgestatteten Flurförderzeuge betrieben werden.

Der Erfindung liegt nun die Aufgabe zugrunde, bei einem Verfahren zum Betrieb einer elektromagnetisch lüftbaren Federkraftbremse der gattungsbildenden Art die Einflüsse der Luftspaltänderung und der Schwankungen der Speisespannung zu eliminieren.

Die Erfindung geht von der Erkenntnis aus, daß sich beim Lüftungsvorgang in dem als Kurve darstellbaren, zeitlichen Verlauf des ansteigenden Erregerstroms eine gegenüber dem stetigen Bereich deutlich erfaßbare Sprungstelle auftritt, deren Stromwert und deren Lage sich in Abhängigkeit von der Luftspaltweite ändern. Diese Sprungstelle im zeitlichen Verlauf der Stromkurve zeigt sich genau an derjenigen Stelle, an der beim Lüftungsvorgang die Lösung der Ankerscheibe vom Bremsrotor weg zum Magnetteil hin einsetzt.

An der genannten Sprungstelle ergibt sich jeweils ein Stromwert, der gehalten oder geringfügig erhöht werden muß, um den Lösestrom zu erzielen, der ein Abheben der Ankerscheibe vom Bremsrotor entgegen der Kraft der mechanischen Bremsfedern sicherstellt. Andererseits kann man an diesem Stromwert der Sprungstelle den Teilstrom ausrichten, mit dem der Magnetteil erregt werden muß, um das Bremsmoment gegenüber der Vollbremsung zu verringern, ohne daß sich hierbei die Ankerscheibe vom Bremsrotor löst.

Unabhängig davon, ob sich die Luftspaltweite oder die Speisespannung im zulässigen Toleranzbereich ändert, ergibt sich an der beschriebenen Sprungstelle in dem zeitlichen Verlauf der Erregerstromkurve immer der passende Stromwert, dessen Höhe und Zeitpunkt somit als Bezugsgröße für die Steuerung eines verzögerten Bremseinsatzes bei einer elektromagnetisch lüftbaren Federkraftbremse der in Rede stehenden Art genutzt werden kann. Bei einem kleinen Luftspalt, bei dem der Widerstand des magnetischen Kreises relativ gering ist, tritt die Sprungstelle in der Stromkurve schon kurz nach dem Aufschalten der Erregerspannung auf und zwar bei einem relativ niedrigen Stromwert. Umgekehrt verhält es sich bei einem größeren Luftspalt und entsprechend erhöhtem magnetischen Widerstand im magnetischen Kreis, dann nämlich tritt die erwähnte Sprungstelle später bei einem höheren Erregerstrom auf. Bei Schwankungen in der Betriebsspannung ergeben sich zeitliche Verschiebungen in der Sprungstelle der Erregerstromkurve, die man ebenfalls als Steuergröße berücksichtigen kann. Allerdings kann man die Erregung des Magnetteils auch nur mit einer Teilspannung der zur Verfügung stehenden Batteriespannung vorsehen, um den Einfluß einer Spannungsänderung infolge Erschöpfung der Batterie auszuschließen.

Aufgrund der dargelegten Erkenntnisse geschieht die erfindungsgemäße Lösung der weiter oben angegebenen Aufgabe bei einem Verfahren zum Betrieb einer elektromagnetisch lüftbaren Federkraftbremse der gattungsgemäßen Art durch die kennzeichnenden Merkmale des Patentanspruchs 1.

Die exakte Bestimmbarkeit des Lösestroms in Abhängigkeit von der Luftspaltweite ermöglicht es, die Erregerspule des Magnetteils für eine Spannung auszulegen, die deutlich kleiner als die für den Lösestrom anzulegende Lösespannung ist, die nur kurzzeitg aufgeschaltet werden muß. So kann die Federkraftbremse bis zur Verschleißgrenze hin über einen größeren Luftspalt arbeiten, womit die Wartungsintervalle vergrößert werden können. Die Auswertung der Sprungstelle im zeitlichen Verlauf des Erregerstroms beim Lüftungsvorgang ermöglicht ferner das frühzeitige Zurückführen des Erregerstroms auf den Haltestrom, weswegen auch bei hoher Betriebsspannung keine zusätzliche Verlustwärme entsteht. Schließlich kann auch das Fehlen der Sprungstelle im Verlauf der Erregerstromkurve als Indikator für eine Störung genutzt werden, woraufhin der weitere Betrieb der Federkraftbremse unterbrochen wird. So kann die Sprungstelle in der Stromkurve bei zu kleinem oder zu großem Luftspalt, bei zu geringer oder fehlender Speisegleichspannung oder bei defekter Erregerspule des Magnetteils fehlen oder wenigstens nicht mehr erfaßbar sein. Bei sofortiger Betriebsunterbrechung in einem solchermaßen feststellbaren Störfall können Folgeschäden vermieden werden, was die Betriebssicherheit erhöht.

Soweit es die exakte Bestimmbarkeit des Teilstroms betrifft, der beim Bremseinsatz für das gewünschte Teilbremsmoment maßgeblich ist, hat man hierüber die Möglichkeit, die Ankerscheibe sich sanft an die Reibflächen des Bremsrotors anlegen zu lassen, um ein allmählich einsetzendes Bremsmoment zu erzielen. Danach kann dann für den jeweils weiteren Bremsverlauf beliebig das Bremsmoment schnell oder langsam erhöht werden, was von den Bedingungen des jeweiligen Bremsfalles abhängig gemacht werden kann.

Vorteilhafte Ausgestaltungsmerkmale der Erfindung ergeben sich aus den Unteransprüchen. Hier ist besonders hervorzuheben, daß beim Bremseinsatz im Falle des unterbrochenen Haltestroms auch in der Induktionsspannung der Erregerspule des Magnetteils eine Sprungstelle im zeitlichen Verlauf der Spannungskurve ermittelt werden kann, die hier durch den Abfall der Ankerscheibe vom Magnetteil bedingt ist. Dadurch läßt sich der Zeitpunkt für die Aufschaltung der Teilspannung zur Erzielung des Teilstroms auf die Erregerspule des Magnetteils exakt bestimmen, um den sanften Bremseinsatz zu bewirken.

Die Erfindung wird nachfolgend anhand der Zeichnung an einem Ausführungsbeispiel näher erläutert. Dabei zeigen:
- Fig. 1: ein Schnitt durch eine elektromagnetisch lüftbare Federdruckbremse und
- Fig. 2: Diagramme der zeitlichen Verläufe der Erregerspannung, des Erregerstromes und des Bremsmomentes bei der erfindungsgemäß betriebenen Federkraftbremse nach Fig. 1 bei einem unmittelbar aufeinanderfolgenden Lüftungs- und Bremsvorgang.

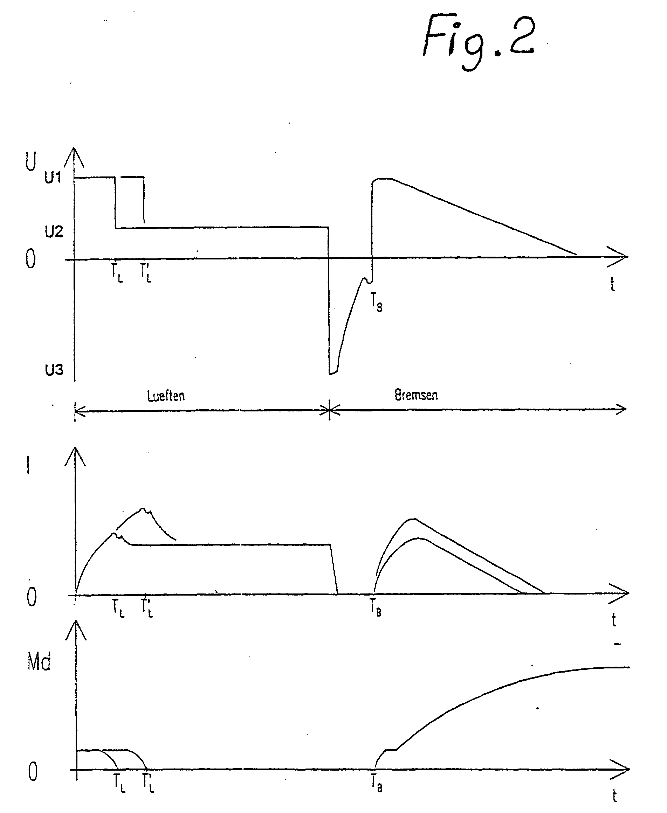

Die in Fig.2 befindlicher Bezugszeichnen bedeuten folgendes : -
- T_{L} =: Lösezeitpunkt der Ankerscheibe vom Bremsrotor, bei kleinem Luftspalt.
- T_{L} =: Lösezeitpunkt der Ankerscheibe vom Bremsrotor, bei großem Luftspalt.
- T_{B} =: Ankerscheibe trifft auf den Bremsrotor. Anlegen einer Teilspannung zum sanften Bremsen.
- U1 =: Lösespannung
- U2 =: Haltespannung
- U3 =: Induktionsspannung

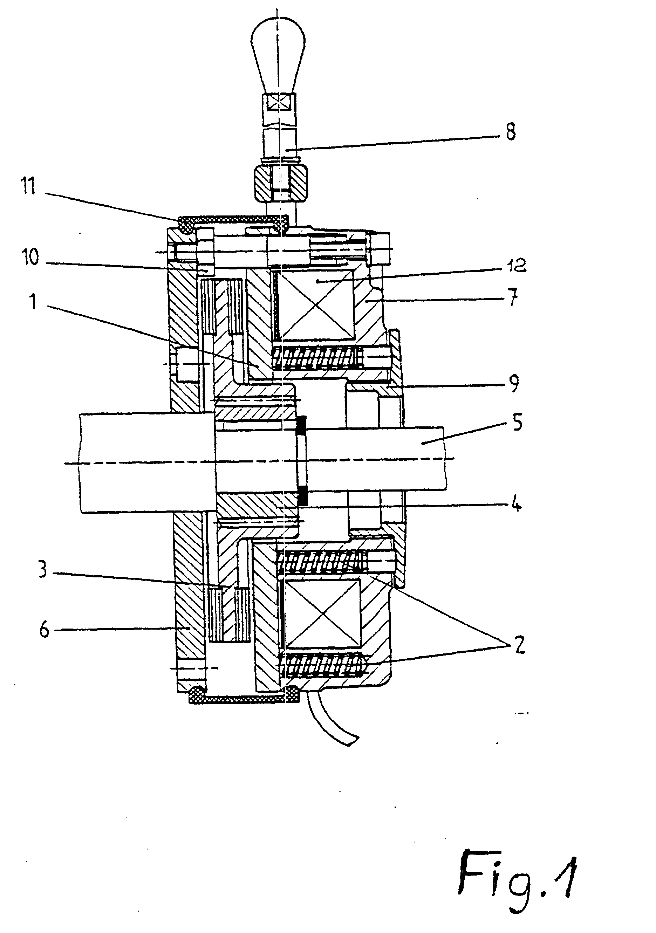

Im einzelnen erkennt man in Fig. 1 eine Federkraftbremse, durch die hindurch sich koaxial eine abzubremsende Welle 5 erstreckt, auf welche axial verschieblich jedoch drehfest ein Bremsrotor 3 angeordnet ist. Dazu sitzt auf der Welle 5 drehfest eine Nabe 4, die entlang ihres Umfanges eine achsparallele Verzahnung hat, die mit einer entsprechenden Innenverzahnung an der zentralen Bohrung des Bremsrotors 3 zusammenwirkt. Der Bremsrotor 3 hat entlang der äußeren Ränder an seinen beiden Stirnseiten Reibbeläge, über die er an der einen Stirnseite mittels einer Ankerscheibe 1 beaufschlagbar ist. Die Ankerscheibe 1 ist ebenfalls axial verschiebbar und wird auf ihrer von dem Bremsrotor 3 abliegenden Seite von anliegenden Druckfedern 2 beaufschlagt, deren Kraft in gewissen Grenzen von einem Einstellring 9 verändert werden kann.

Die Ankerscheibe 1 ist Teil eines magnetischen Kreises, zu dem ferner ein Magnetteil 7 gehört, das eine elektrische Erregerspule 12 hat. Bei Erregung des Magnetteils 7 wird unter Schließung eines Luftspaltes die Ankerscheibe 1 unter Überwindung der Druckkräfte der Federn 2 gegen die benachbarte Stirnseite des Magnetteils 7 angezogen. Damit kommt die Ankerscheibe 1 vom Bremsrotor 3 frei. Auf der der Ankerscheibe 1 abgelegenen Seite ist ein gestellfestes Widerlager in Gestalt einer Gegendruckscheibe 6 angeordnet, gegen die der Bremsrotor 3 infolge Mitnahme durch die Ankerscheibe 1 bei entregtem Magnetteil 7 aufgrund der Druckkraft der Druckfedern 2 gepreßt wird. Zur Nachstellung des sich dabei öffnenden Luftspaltes zwischen dem Magnetteil 7 und der Ankerscheibe 1 dienen Hülsenschrauben 10, die am Gestell der Federkraftbremse ebenso wie die Druckfedern 2 gegengelagert sind.

Für den Lüftvorgang der Federkraftbremse wird das Magnetteil 7 über die Erregerspule 12 erregt, indem daran die im oberen Diagramm von Fig. 2 wiedergegebene Lösespannung U1 angelegt wird. Hat sich zum Zeitpunkt T_{L} die Ankerscheibe 1 vom Bremsrotor 3 gelöst und an das Magnetteil 7 angelegt, wird die an der Erregerspule 12 anliegende Spannung auf die Haltespannung U2 verringert, denn nunmehr genügt zur Überwindung der mechanischen Gegenkraft der Druckfedern 2 eine geringere Erregung des Magnetteils 7, weil durch Schließung des Luftspaltes zur Ankerscheibe 1 hin der magnetische Widerstand verringert ist.

Den zeitlichen Verlauf des in der Erregerspule 12 fließenden Erregerstroms E zeigt das zweite Diagramm von oben in Fig. 2. Bis zum Ablösen der Ankerscheibe 1 vom Bremsrotor 3 steigt die Stromkurve stetig an und weist dann im Zeitpunkt des Abhebens der Ankerscheibe 1 vom Bremsrotor 3 im Zeitpunkt T_{L} eine Sprungstelle auf, an der sich ein bestimmter Stromwert ergibt. Dieser Stromwert ist, wie Fig. 2 weiter deutlich macht, abhängig von der von der Ankerscheibe 1 zum Magnetteil 7 hin zu überbrückenden Luftspaltweite, er ist bei größerem Luftspalt höher und tritt überdies zeitlich später auf. In Abhängigkeit dieses Stromwertes kann der etwas größer zu wählende Lösestrom, der für den Abfall der Ankerscheibe 1 vom Bremsrotor 3 notwendig ist, exakt ermittelt und vorgegeben werden. Gegenüber diesem maximalen Stromwert ist dann der Haltestrom bei am Magnetteil 7 anliegender Ankerscheibe 1 verringert.

Da sich bei unmittelbar aufeinanderfolgenden Arbeitsspielen der Federkraftbremse der Luftspalt so gut wie nicht ändert, kann jeweils für die nachfolgenden Arbeitsspiele aus dem ermittelten Stromwert an der Sprungstelle der Stromkurve der Lösestrom, der Haltestrom und ein Teilstrom abgeleitet werden, der für einen Bremseinsatz mit verringertem Bremsmoment aufgebracht werden soll.

Der Bremseinsatz beginnt zunächst mit dem Abschalten der Erregerspannung für die Erregerspule 12, an der sich aufgrund der Induktivität die Spannung umkehrt, wie die Induktionsspannung U3 im oberen Diagramm von Fig. 2 veranschaulicht. In der zeitlichen Kurve der abfallenden Induktionsspannung tritt zum Zeitpunkt T_{B} eine Sprungstelle auf, die signalisiert, daß in diesem Zeitpunkt die Ankerscheibe 1 auf den Bremsrotor 3 auftrifft. Ab diesem Zeitpunkt kann eine solche Erregerspannung an die Erregerspule 12 des Magnetteils 7 angelegt werden, daß ein sanfter Bremseinsatz mit langsam ansteigendem Bremsmoment erfolgt, wie es das untere Diagramm in Fig. 2 deutlich macht. Dadurch fließt in der Erregerspule 12 ein Teilstrom, der kleiner als der Lösestrom sein muß, damit die Ankerscheibe 1 beim Bremsvorgang nicht wieder zum Magnetteil 7 hin angezogen wird. Andererseits kann dieser Lösestrom jetzt exakt variiert werden, um Einfluß auf den sanften Bremsverlauf nehmen zu können. Wie aus dem mittleren Diagramm von Fig. 2 hervorgeht, ist hierbei wichtig, daß der jeweilige Stromwert des Lösestroms von dem Stromwert bei der Sprungstelle des zeitlichen Stromverlaufs in dem vorherigen Lüftungsvorgang oder in einem der vorangehenden Lüftungsvorgänge abhängig gemacht werden kann, damit der gewünschte sanfte Bremseinsatz nicht von Änderungen der Luftspaltweite zwischen der abgefallenen Ankerscheibe 1 und dem Magnetteil 7 abhängig ist.

Von seinem Maximalwert ab verringert man den Lösestrom, indem die Erregerspannung heruntergeregelt wird. Bei entregtem Magnetteil 7 steht dann das volle Bremsmoment an, bis dahin ergibt sich der zeitliche Momentenverlauf, der in dem unteren Diagramm von Fig. 2 ab dem Zeitpunkt T_{B} dargestellt ist.

## Patentansprüche

1. Verfahren zum Betrieb einer elektromagnetisch lüftbaren Federkraftbremse mit einem mit der abzubremsenden Welle (5) drehfesten, jedoch darauf axial verschiebbaren Bremsrotor (3), der zwischen einem gestellfesten Widerlager, wie einer Gegendruckscheibe (6), und einer von zumindest einer Druckfeder (2) in Richtung zum Bremsrotor (3) hin beaufschlagten Ankerscheibe (1) angeordnet ist, die entsprechend der Kraft der Druckfeder (2) mit der vom Bremsrotor (3) abliegenden Seite unter dessen Freigabe zu einem Magnetteil (7) hin über einen Luftspalt hinweg anziehbar ist, wobei der Erregerstrom für den Magnetteil (7) während des Lüftvorgangs von einem höheren Lösestrom zum Abheben der Ankerscheibe (1) vom Bremsrotor (3) auf einen geringeren Haltestrom zum Festhalten der Ankerscheibe (1) am Magnetteil (7) vermindert und der Haltestrom beim Bremseinsatz kurzzeitg verringert oder unterbrochen und nach dem Abfall der Ankerscheibe (1) entsprechend den Bremsbedingungen zumindest anfänglich auf einen gegenüber dem Lösestrom verminderten Teilstrom eingestellt wird,
**dadurch gekennzeichnet**,
daß mit dem Aufschalten der Erregerspannung für den Lüftvorgang in der ansteigenden Kurve des Erregerstromes die durch den Abfall der Ankerscheibe (1) vom Bremsrotor (3) bedingte Sprungstelle ermittelt und entsprechend dem zugehörigen Stromwert der relativ dazu höhere Wert des Lösestroms und der gleiche oder niedrigere Wert des Teilstroms für nachfolgende Arbeitsspiele bestimmt werden.

2. Verfahren nach Anspruch 1,
**dadurch gekennzeichnet**, daß in Abhängigkeit des Zeitpunkts der Sprungstelle in der Erregerstrom-Kurve beim Lüftvorgang der Zeitpunkt für das Umschalten vom Lösestrom auf den Haltestrom bestimmt wird.

3. Verfahren nach Anspruch 1 oder 2,
**dadurch gekennzeichnet**, daß beim Bremseinsatz im Falle des unterbrochenen Haltestroms die Induktionsspannung in der Erregerspule des Magnetteils erfaßt und die durch den Abfall der Ankerscheibe vom Magnetteil bedingte Sprungstelle in der Spannungskurve ermittelt und zu deren Zeitpunkt die Teilspannung zur Erzielung des Teilstromes auf die Erregerspule aufgeschaltet wird.

4. Verfahren nach einem der Ansprüche 1 bis 3,
**dadurch gekennzeichnet**,
daß die Zeit- und Stromwertdaten der Sprungstellen der Erregerstrom-Kurve und/oder der Induktionsspannungs-Kurve von jedem Lüftvorgang bzw. Bremseinsatz erfaßt, in einen Speicher eingegeben und jeweils für den darauf folgenden Lüftvorgang bzw. Bremseinsatz ausgewertet werden.

## Claims

1. Method for operating an electromagnetically released spring-applied brake having a brake rotor (3) which is rotationally secured on the shaft (5) which is to be braked but which is axially displaceable thereon and which is mounted between an abutment fixed on the frame, such as a counter pressure disc (6), and an anchor disc (1) which is biased by at least one compression spring (2) in the direction of the brake rotor (3), with the side of the anchor disc remote from the brake rotor (3) being attracted, according to the force of the compression spring (2) and during its release, towards a magnetic part (7) over an air gap, wherein the exciter current for the magnetic part (7) reduces during the release process from a higher release current for lifting the anchor disc (1) from the brake rotor (3) to a lower holding current for holding the anchor disc (1) on the magnetic part (7), and the holding current during application of the brake is temporarily reduced or interrupted and after the release of the anchor disc (1) the exciter current is set according to the brake conditions at least initially to a partial current which is lower than the release current,
**characterised in that** on switching on the exciter voltage for the release process the jump point arising from the release of the anchor disc (1) from the brake rotor (3) is detected in the rising curve of the exciter current and in accordance with the associated value of the current, the higher value of the release current relative thereto and the same or lower value of the partial current for the following work cycles are determined.

2. Method according to claim 1 **characterised in that** the time point for switching over from the release current to the holding current is determined in dependence on the time point of the jump in the exciter current curve during the release process.

3. Method according to claim 1 or 2 **characterised in that** during application of the brake in the event of the interrupted holding current the induction voltage in the exciter coil of the magnetic part is detected and the jump in the voltage curve conditioned by the drop of the anchor disc from the magnetic part is ascertained and at the time thereof the partial voltage is switched on to achieve the partial current to the exciter coil.

4. Method according to one of claims 1 to 3
**characterised in that** the time and current value data of the jump points of the exciter current curve and/or the induction voltage curve of each release process or brake initiation is detected, fed into a memory and evaluated each time for the release process or brake application which follows on therefrom.

## Revendications

1. Procédé de fonctionnement d'un frein à ressort à desserrage électromagnétique à initiation de freinage souple avec un rotor de freinage (3) en rotation corrélative avec l'arbre à freiner (5), mais cependant déplaçable axialement sur celui-ci, et installé entre un dispositif de butée, tel qu'une plaque de contre-pression (6) solidaire du châssis, et un induit en disque (1) soumis à l'action exercée en direction du rotor de freinage (3) par au moins un ressort de pression (2) et attiré, par-dessus un entrefer, vers une pièce magnétique (7), du côté opposé au rotor de freinage (3), lors de la libération de celui-ci, en fonction de la force du ressort de pression (2), le courant d'excitation pour la pièce magnétique (7) étant réduit pendant l'opération de deserrage, passant ainsi d'un courant de desserrage élevé, qui soulève l'induit en disque (1) du rotor de freinage (3), à un courant de maintien plus faible, qui maintient l'induit en disque (1) contre la pièce magnétique (7), et le courant de maintien étant réduit ou interrompu brièvement, lors du freinage, et réglé, après retombée du disque d'induit (1), selon les conditions de freinage, au moins au début, en courant partiel réduit par rapport au courant de desserrage,
**caractérisé en ce que**
lors de l'application de la tension d'excitation pour l'opération de desserrage, le point de discontinuité, résultant du retrait du disque d'induit (1) du rotor de freinage (3), est détecté dans la courbe ascendante du courant d'excitation et, conformément à la valeur afférente, la valeur de courant de desserrage relativement plus élevée et la valeur égale ou plus faible du courant partiel sont déterminées pour les opérations suivantes.

2. Procédé selon la revendication 1,
**caractérisé en ce que**,
le moment de la commutation de courant de desserrage sur courant de maintien est déterminé, lors du desserrage, en dépendance du moment d'apparition du point de discontinuité dans la courbe du courant d'excitation.

3. Procédé selon selon la revendication 1 ou 2,
**caractérisé en ce que**,
lors de la mise en oeuvre du freinage, en cas de l'interruption du courant de maintien, la tension d'induction est détectée dans la bobine d'excitation de la pièce magnétique et le point de discontinuité, qui résulte du retrait de l'induit en disque de la pièce magnétique, est déterminé dans la courbe de tension, la tension partielle étant appliquée, à ce moment, sur la bobine d'excitation pour l'obtention du courant partiel.

4. Procédé selon l'une des revendications 1 à 3,
**caractérisé en ce que**
les données des valeurs-temps et valeurs-courant des points de discontinuité de la courbe de courant d'excitation et/ou de la courbe de tension d'induction de chaque opération de désserrage ou de freinage sont détectées, mémorisées et exploitées respectivement pour les opération de desserrage ou de freinage suivantes.
